# EUROPEAN PATENT SPECIFICATION

(11) **EP 1 313 198 B1**
(45) Date of publication and mention of the grant of the patent: **28.02.2007**
(21) Application number: 02025591.5
(22) Date of filing: 15.11.2002
(51) Int. Cl.: H02K 5/167

(54) **Improved rotation support, particularly for rotors of electric motors of pumps**
Verbessertes Mittel zur Rotation, insbesondere für Läufer einer elektrischen angetriebenen Pumpe
Moyens perfectionnés de rotation, notamment pour rotor de pompe à entraînement électrique

(30) Priority: 20.11.2001 IT PD20010268
(43) Date of publication of application: 21.05.2003
(73) Proprietor: Askoll Holding S.r.l., 36031 Dueville (IT)
(72) Inventor: Marioni, Elio, 36031 Dueville (Prov. of Vicenza) (IT)
(74) Representative: Botti, Mario

(56) References cited:
- US-A- 3 441 325
- US-A- 5 689 146
- PATENT ABSTRACTS OF JAPAN vol. 1999, no. 13, 30 November 1999 (1999-11-30) & JP 11 230166 A (SHARP CORP), 27 August 1999 (1999-08-27)
- PATENT ABSTRACTS OF JAPAN vol. 008, no. 155 (E-256), 19 July 1984 (1984-07-19) & JP 59 059039 A (HITACHI SEISAKUSHO KK), 4 April 1984 (1984-04-04)

## Description

The present invention relates to an improved rotation support, particularly for rotors of electric motors of pumps.

The invention is particularly suitable for centrifugal pumps such as circulating pumps for heating systems.

As is known in the background art, a type of circulating pump for heating systems comprises an electric motor, whose rotor is keyed on a shaft to which the impeller of the circulating pump is kinematically connected at one end.

The electric motor comprises a substantially cylindrical hollow body made of nonmagnetic material, inside which the rotor is coupled rotatably; in turn, the rotor comprises a bottom, within which the rotation support of one end of the rotating shaft is accommodated, and a flanged head, which is connected to the volute of the circulating pump and from which the opposite end of the rotating shaft to which the impeller of the circulating pump is connected kinematically protrudes.

The stator pack, adapted to turn the rotor when supplied with electric power, is arranged outside the hollow body.

For circulating pumps having a structure of this type, therefore, the heat transfer fluid seeps through the interspace formed between the rotor and the hollow body and reaches the rotation support.

The rotation support is usually constituted by a bush made of ceramic or graphite material, which is self-centering and self-aligning and within which a corresponding end of the shaft is rotatably retained.

Owing to the problems of seepage of the heat transfer fluid, and because circulating pumps remain motionless for several months every year, limescale deposits can block the ends of the shaft on the respective bushes, or the magnet of the rotor on the inner walls of the hollow body in which it is accommodated, causing problems at motor startup.

For this reason, an axial hole is provided at the bottom of the hollow body and has a hermetic plug that can be opened by the user; such hole allows the insertion of a tool, for example a screwdriver, by means of which it is possible to act on the end of the shaft, which is shaped complementarily to the head of the tool, unblocking said shaft.

The main problems linked to this type of circulating pump are noted especially in the correct assembly and stable positioning of the self-centering bush, especially if referred to automatic assembly lines.

The aim of the present invention is to solve or reduce substantially the problems of known types of rotation support for rotors of electric motors of pumps.

Within this aim, an object is to provide a rotation support whose structure allows automatic assembly.

Another object is to provide a rotation support that has a simple structure.

Another object is to provide a rotation support that has a low cost.

This aim and these and other objects that will become better apparent hereinafter are achieved by a rotation support particularly for rotors of electric motors of pumps, of the type that comprises a stator, which is composed of a pack of metallic laminations that form the pole shoes and is fixed to the flanged head of a hollow body in which a permanent-magnet rotor is arranged, one end of the shaft of said rotor being coupled rotatably to the bottom of said hollow body, which is provided with an axial hermetic plug that can be opened by the user, the rotation support being characterized in that it comprises, in succession from the bottom toward the head of said hollow body, and stacked in a corresponding substantially cylindrical seat formed within said bottom and provided with an end retention element:
-- an internally threaded element, for the engagement of said axial plug;
-- a self-aligning and self-centering bush, within which one end of said shaft is coupled rotatably, said bush being arranged with play and with a rotation-preventing mating in a conical portion of said seat that tapers from the head toward the bottom of said hollow body;
-- an O-ring, which is interposed so as to interfere between said bush and said seat; and
-- an element for retaining axial sliding for the threaded element, bush, and O-ring of said support.

Further characteristics and advantages of the rotation support according to the invention will become better apparent from the description of a preferred but not exclusive embodiment thereof, illustrated only by way of non-limitative example in the accompanying drawings, wherein:

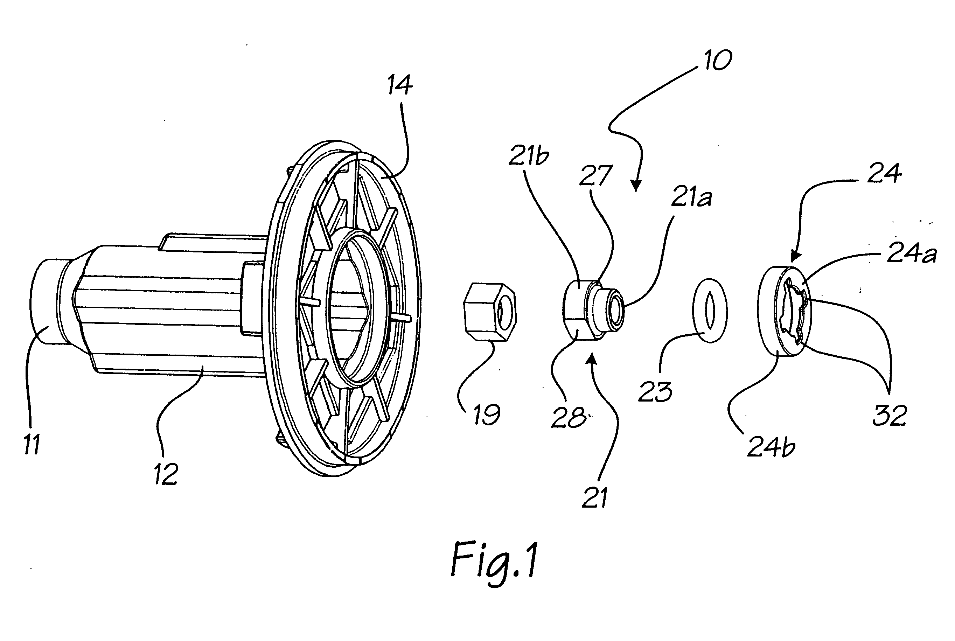

Figure 1 is an exploded view of a portion of an electric motor, particularly for circulating pumps for heating systems, with improved rotation support, according to the invention;

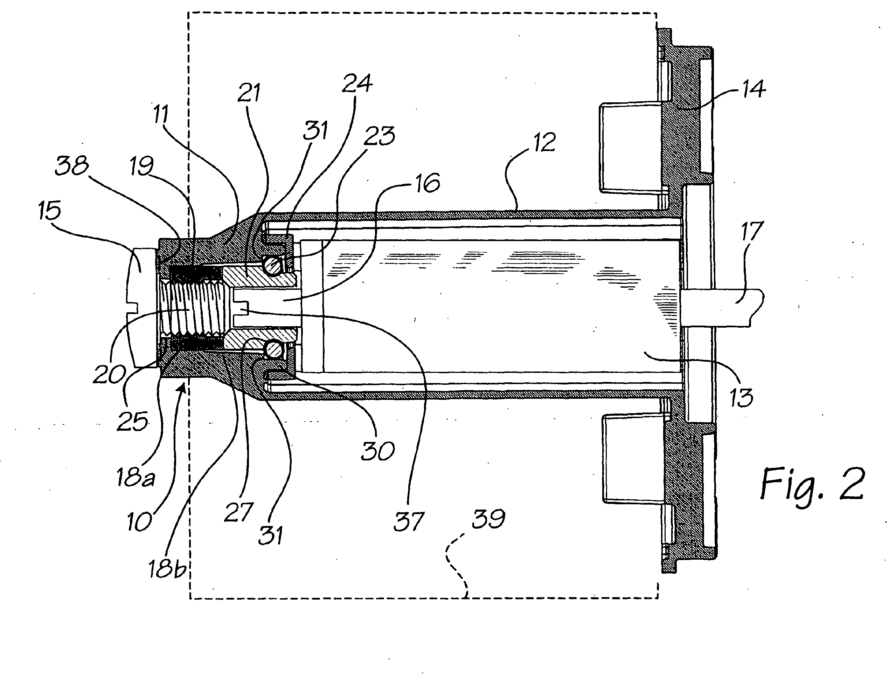

Figure 2 is a longitudinal sectional view of the portion shown exploded in Figure 1, in the assembled condition;
Figure 3 is a partially sectional view of a portion of the support according to the invention;
Figure 4 is a view of a tool for the automatic assembly of a rotation support according to the invention.

With reference to the figures, an improved rotation support particularly for synchronous permanent-magnet electric motors of pumps such as circulating pumps for heating systems, according to the invention, is generally designated by the reference numeral 10.

The support 10 is arranged on the bottom 11 of a hollow body 12, within which a rotor 13 is rotatably coupled and outside which the stator pack 39 is arranged.

The tubular body 12 is provided with a flanged head 14 that lies opposite the bottom 11.

The bottom 11 is closed by an axial plug 15 that can be opened by the user and has an interposed sealing gasket 38 that allows access to the end 16 of the shaft 17, on which the rotor 13 is keyed.

The rotation support 10 comprises, arranged in succession starting from the bottom 11 toward the head 14 of the tubular body 12, in a corresponding substantially cylindrical seat 18 formed in said bottom 11, an internally threaded element 19 for the engagement of the threaded tang 20 of the axial plug 15, a self-aligning and self-centering bush 21, an O-ring 23 that is interposed so as to interfere between the bush 21 and the seat 18, and an element 24 for retaining axial sliding for the preceding components of said support 10.

The bush 21 is arranged with play, with a rotation-preventing mating as described better hereinafter, in a conical portion 18b of the seat 18, which tapers from the head 14 toward the bottom 11 of the tubular body 12.

The seat 18 is shaped, in a downward region, so as to form an annular retention shoulder element 25, on which the components of the support 10 are rested and retained during assembly; said components must be inserted in succession, by means of an appropriate tool 33 described in greater detail hereinafter, through the tubular cavity of the hollow body 12 within which the rotor 13 is to be accommodated.

The internally threaded element 19 is constituted, in this case, by an hexagonal nut, designated by the same reference numeral, which is to be arranged on assembly so that it rests on the annular shoulder 25, within the lower portion 18a of the seat 18, provided with a plurality of axially orientated teeth 26, which are arranged on its cylindrical surface and are adapted to provide a rotation retainer for said internally threaded element 19.

The bush 21 then rests on the internally threaded element 19 and has an upper portion 21a whose outside diameter is smaller than the outside diameter of the lower portion 21b, so as to define an annular shoulder 27, on which the O-ring 23 rests on assembly; said O-ring is adapted to surround, with interference, the upper portion 21a.

The rotation-preventing coupling between the bush 21 and the seat 18 is provided by two opposite flat portions 28, formed on the lower portion 21b of the bush 21, which face on assembly two opposite flat portions 29 of the seat 18.

The bush 21 is inserted with play within the conical shaped portion 18b of the seat 18, but cannot perform an axial translational motion and cannot rotate.

The retention element 24 is constituted, in this case, by a cap, designated by the same reference numeral, which is to be fixed to a collar 30 that protrudes inside the tubular body 12 above the bottom 11.

The inside diameter of the collar 30 forms, with the opposite flat portions 29 of the seat 18, shoulders 31 on which the O-ring 23 rests on assembly, said O-ring coupling so as to interfere internally with respect to the collar 30.

In practice, the O-ring 23 has a seat that is delimited by the shoulders 31 and 27, formed respectively at the collar 30 and at the bush 21.

The retention element 24 is constituted by a flat annular portion 24a and by a cylindrical annular portion 24b, and can be fixed to the collar 30 for example by ultrasound welding, vibration welding, gluing, mechanical snap action, or other suitable connection technique.

The flat annular portion 24a of the retention element 24 has an axial dimension that is substantially contained within the axial dimension of the upper portion 21a of the bush 21 and an inside diameter that is greater than the outside diameter of the upper portion 21a, forming an annular play that allows small settling movements of said bush 21 when the rotor 13 moves or during the self-centering and self-alignment step.

The flat annular portion 24a of the retention element 24, moreover, is provided with radially arranged slots 32, which allow, during assembly, to act by pushing on the O-ring 23 with the tool 33 and allow correct assembly thereof in interference on the seat 18 and on the bush 21.

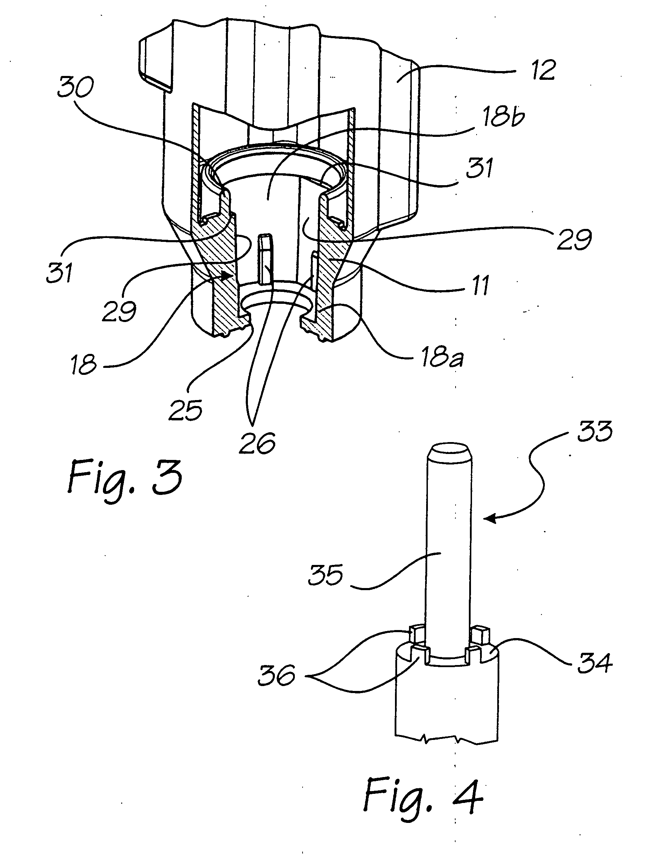

Figure 4 illustrates a tool 33, which can be used advantageously to assemble automatically the support 10 on the hollow body 12.

The tool 33 comprises a head portion 34, which has a substantially cylindrical shape and from which a rod-like element 35 and teeth 36 protrude coaxially; said teeth are also radially orientated and are arranged around the base of the rod-like element 35.

If the retention element 24 is fixed by ultrasound welding to the collar 30, the head portion 34 of the tool 33 is a sonotrode.

In practice, the rod-like element 35 is inserted in succession in the retention element 24, the O-ring 23, the bush 21 and the internally threaded element 19.

The retention element 24, the bush 21 and the internally threaded element 19 must of course be orientated correctly beforehand.

The teeth 36 engage the radial slots 32 of the retention element 24 and push the O-ring 23 once said components have been arranged within the seat 18.

Once the retention element 24 has been arranged on the collar 30 and the head portion 34 of the tool 33 rests on its flat annular portion 24a, the ultrasound welding process of said retention element 24 on the collar 30 can begin.

In practice it has been found that the present invention has achieved the intended aim and objects.

In fact, a supporting structure has been provided which solves the problems of assembly and stable positioning of the self-aligning and self-centering bush 21.

Furthermore, if the end 16 of the shaft 17 for supporting the rotor 13, due to limescale deposits, is locked for example on the bush 21, it is possible to act with a tool, for example a screwdriver, on the end 16, which in this case has a slot 37, by opening the plug 15.

The retention element 24 therefore withstands the axial thrust applied with the screwdriver, keeping the bush 21 in its seat.

Moreover, the supporting structure 10 is such that it reduces the noise due to the play between the bush 21 and the seat 18, such noise being usually not negligible owing to the high rotation rate of the rotor 13.

The O-ring 23, besides allowing the self-alignment of the bush 21, also provides a hydraulic seal, reducing the seepage of the heat transfer fluid when the axial plug 15 is opened and accordingly causing less inconvenience to the user.

The present invention is susceptible of numerous modifications and variations, all of which are within the scope of the appended claims.

The technical details may be replaced with other technically equivalent elements.

The materials, so long as they are compatible with the contingent use, as well as the dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A rotation support (10), particularly for rotors of electric motors of pumps, of the type that comprises a stator, which is composed of a pack (39) of metallic laminations that form the pole shoes and is fixed to the flanged head (14) of a hollow body (12) in which a permanent-magnet rotor (13) is arranged, one end (16) of the shaft (17) of said rotor (13) being coupled rotatably to the bottom (11) of said hollow body (12), which is provided with an axial hermetic plug (15) that can be opened by a user, the rotation support (10) being **characterized in that** it comprises, in succession from the bottom (11) toward the head (14) of said hollow body (12), and stacked in a corresponding substantially cylindrical seat (18) formed within said bottom (11) and provided with an end retention element (25):
-- an internally threaded element (19), for the engagement of said axial plug (15);
-- a self-aligning and self-centering bush (21), within which one end (16) of said shaft (17) can be coupled rotatably, said bush (21) being arranged with play and with a rotation-preventing mating in a conical portion (18b) of said seat (18) that tapers from the head (14) toward the bottom (11) of said hollow body (12);
-- an O-ring (23), which is interposed so as to interfere between said bush (21) and said seat (18); and
-- an element (24) for preventing axial sliding of said threaded element, bush and O-ring, of said support (10).

2. The support according to claim 1, **characterized in that** said seat (18) is provided, in a downward region, with an annular shoulder (25) that provides said end retention element on which said threaded element (19) rests.

3. The support according to one or more of the preceding claims, **characterized in that** said internally threaded element (19) is constituted by a hexagonal nut to be arranged, on assembly, so as to rest on said annular shoulder (25), within a lower portion (18a) of said seat (18).

4. The support according to one or more of the preceding claims, **characterized in that** said lower portion (18a) of said seat (18) is provided with a plurality of axially orientated teeth (26) arranged on its cylindrical surface and adapted to provide a rotation retainer for said internally threaded element (19).

5. The support according to one or more of the preceding claims, **characterized in that** said bush (21) has an upper portion (21a) whose outside diameter is smaller than the outside diameter of its lower portion (21b), so as to form an annular shoulder (27) on which said O-ring (23) rests on assembly, said O-ring (23) being adapted to surround said upper portion (21a) with interference.

6. The support according to one or more of the preceding claims, **characterized in that** said lower portion (21b) of the bush (21) is provided with two mutually opposite flat portions (28) which face, on assembly, two mutually opposite flat portions (29) of said seat (18), so as to provide said rotation-preventing coupling.

7. The support according to one or more of the preceding claims, **characterized in that** said retention element (24) is substantially annular and is shaped to as to be fixed above said bottom (11).

8. The support according to one or more of the preceding claims, **characterized in that** said retention element (24) is constituted by a cap, to be fixed to a collar (30) that runs inside said tubular body (12) above said bottom (11), and comprises a flat annular portion (24a) and a cylindrical annular portion (24b).

9. The support according to claim 8, **characterized in that** the inside diameter of said collar (20) forms, together with said mutually opposite flat portions (29) of the seat (18), shoulders (31) on which said O-ring (23) rests, on assembly, so as to couple with interference inside said collar (30).

10. The support according to one or more of the preceding claims, **characterized in that** said flat annular portion (24a) of the cap (24) has an axial dimension that is substantially contained within the axial dimension of said upper portion (21a) of the bush (21) and an inside diameter that is greater than the outside diameter of said upper portion (21a), forming an annular play.

11. The support according to one or more of the preceding claims, **characterized in that** said flat annular portion (24a) of the cap (24) is provided with radial slots (32) that lie, upon assembly, above said O-ring (23).

12. The support according to one or more of the preceding claims, **characterized in that** said cap (24) is fixed to said collar (30) by ultrasound welding.

13. The support according to one or more of claims 1 to 11, **characterized in that** said cap (24) is fixed to said collar (30) by vibration welding.

14. The support according to one or more of claims 1 to 11, **characterized in that** said cap (24) is fixed to said collar (30) by gluing.

15. The support according to one or more of claims 1 to 11, **characterized in that** said cap (24) is fixed to said collar (30) by mechanical snap action.

## Patentansprüche

1. Drehlager (10), insbesondere für Rotoren von Elektromotoren von Pumpen, von der Bauart, die einen Stator umfasst, der aus einem Stapel (39) aus Metalllamellen besteht, die die Polschuhe bilden, und am angeflanschten Kopf (14) eines Hohlkörpers (12) befestigt ist, in dem ein Permanentmagnetrotor (13) angeordnet ist, wobei ein Ende (16) der Welle (17) des Rotors (13) drehbar mit der Basis (11) des Hohlkörpers (12) verbunden ist, die mit einem axialen, dicht abschließenden Stopfen (15) versehen ist, der von einem Benutzer geöffnet werden kann, wobei das Drehlager (10) **dadurch gekennzeichnet ist, dass** es in der Reihenfolge von der Basis (11) zum Kopf (14) des Hohlkörpers (12) hin, in einer entsprechenden im Wesentlichen zylindrischen Aufnahme (18), die innerhalb der Basis (11) ausgebildet und mit einem Abschlusshalteelement (25) versehen ist, in Übereinanderlage umfasst:
-- ein Element (19) mit Innengewinde für den Eingriff des axialen Stopfens (15);
--eine selbstausrichtende und selbstzentrierende Hülse (21), in der ein Ende (16) der Welle (17) drehbar verankert werden kann, wobei die Hülse (21) mit Spiel und mit einer drehfesten Teilepaarung in einem konischen Abschnitt (18b) der Aufnahme (18) angeordnet ist, die vom Kopf (14) zur Basis (11) des Hohlkörpers (12) hin enger wird;
-- einen O-Ring (23), der so dazwischengesetzt ist, dass er zwischen der Hülse (21) und der Aufnahme (18) angreift; und
-- ein Element (24), um ein axiales Verschieben des Gewindeelements, der Hülse und des O-Rings des Lagers (10) zu verhindern.

2. Lager nach Anspruch 1, **dadurch gekennzeichnet, dass** die Aufnahme (18) in einem unteren Bereich mit einem umlaufenden Ansatz (25) versehen ist, der das Abschlusshalteelement bildet, an dem das Gewindeelement (19) anliegt.

3. Lager nach einem oder mehreren der vorhergehenden Ansprüche, **dadurch gekennzeichnet, dass** das Element (19) mit Innengewinde durch eine sechseckige Mutter gebildet ist, die bei der Montage so anzuordnen ist, dass sie innerhalb eines unteren Abschnitts (18a) der Aufnahme (18) an dem umlaufenden Ansatz (25) anliegt.

4. Lager nach einem oder mehreren der vorhergehenden Ansprüche, **dadurch gekennzeichnet, dass** der untere Abschnitt (18a) der Aufnahme (18) mit mehreren axial ausgerichteten Zähnen (26) versehen ist, die an seiner zylindrischen Oberfläche angeordnet und dazu ausgelegt sind, eine drehfeste Halterung für das Element (19) mit Innengewinde bereitzustellen.

5. Lager nach einem oder mehreren der vorhergehenden Ansprüche, **dadurch gekennzeichnet, dass** die Hülse (21) einen oberen Abschnitt (21a) hat, dessen Außendurchmesser kleiner als der Außendurchmesser ihres unteren Abschnitts (21b) ist, um einen umlaufenden Ansatz (27) zu bilden, an dem der O-Ring (23) nach der Montage anliegt, wobei der O-Ring (23) dazu ausgelegt ist, den oberen Abschnitt (21a) zu umgeben und daran anzugreifen.

6. Lager nach einem oder mehreren der vorhergehenden Ansprüche, **dadurch gekennzeichnet, dass** der untere Abschnitt (21b) der Hülse (21) mit zwei einander entgegengesetzten, flachen Abschnitten (28) versehen ist, die nach der Montage zwei einander gegenüberliegenden, flachen Abschnitten (29) der Aufnahme (18) zugewandt sind, um die drehfeste Verbindung bereitzustellen.

7. Lager nach einem oder mehreren der vorhergehenden Ansprüche, **dadurch gekennzeichnet, dass** das Halteelement (24) im Wesentlichen umlaufend und so geformt ist, dass es über der Basis (11) zu befestigen ist.

8. Lager nach einem oder mehreren der vorhergehenden Ansprüche, **dadurch gekennzeichnet, dass** das Halteelement (24) durch eine Kappe gebildet ist, die an einem Bund (30) zu befestigen ist, der sich innerhalb des Hohlkörpers (12) über der Basis (11) erstreckt und einen flachen umlaufenden Abschnitt (24a) sowie einen zylindrischen umlaufenden Abschnitt (24b) umfasst.

9. Lager nach Anspruch 8, **dadurch gekennzeichnet, dass** der Innendurchmesser des Bunds (20) zusammen mit den einander gegenüberliegenden, flachen Abschnitten (29) der Aufnahme (18) Absätze (31) bildet, an denen nach der Montage der O-Ring (23) anliegt, um unter Eingriff innerhalb des Bunds (30) eine Verbindung herzustellen.

10. Lager nach einem oder mehreren der vorhergehenden Ansprüche, **dadurch gekennzeichnet, dass** der flache umlaufende Abschnitt (24a) der Kappe (24) eine Axialabmessung hat, die im Wesentlichen innerhalb der Axialabmessung des oberen Abschnitts (21a) der Hülse (21) enthalten ist, und einen Innendurchmesser, der größer als der Außendurchmesser des oberen Abschnitts (21a) ist, wobei ein umlaufendes Spiel gebildet ist.

11. Lager nach einem oder mehreren der vorhergehenden Ansprüche, **dadurch gekennzeichnet, dass** der flache umlaufende Abschnitt (24a) der Kappe (24) mit Radialnuten (32) versehen ist, die nach der Montage über dem O-Ring (23) liegen.

12. Lager nach einem oder mehreren der vorhergehenden Ansprüche, **dadurch gekennzeichnet, dass** die Kappe (24) am Bund (30) durch Ultraschallschweißen befestigt ist.

13. Lager nach einem oder mehreren der Ansprüche 1 bis 11, **dadurch gekennzeichnet, dass** die Kappe (24) am Bund (30) durch Vibrationsschweißen befestigt ist.

14. Lager nach einem oder mehreren der Ansprüche 1 bis 11, **dadurch gekennzeichnet, dass** die Kappe (24) am Bund (30) durch Kleben befestigt ist.

15. Lager nach einem oder mehreren der Ansprüche 1 bis 11, **dadurch gekennzeichnet, dass** die Kappe (24) am Bund (30) durch einen mechanischen Schnappvorgang befestigt ist.

## Revendications

1. Support de rotation (10), en particulier pour rotors de moteurs électriques de pompes, du type comprenant un stator, qui est composé d'un paquet (39) de tôles métalliques formant les épanouissements polaires et qui est fixé à la tête bridée (14) d'un corps creux (12) où un rotor à aimant permanent (13) est agencé, un bout (16) de l'arbre (17) dudit rotor (13) étant couplé rotatif au fond (11) dudit corps creux (12), qui est équipé d'un bouchon étanche axial (15) qui peut être ouvert par un usager, le support de rotation (10) étant **caractérisé en ce qu'**il comprend, de suite à partir du fond (11) envers la tête (14) dudit corps creux (12), et empilés dans un logement correspondant sensiblement cylindrique (18) formé dans ledit fond (11) et équipé d'un élément terminal de tenue (25) :
- un élément fileté à l'intérieur (19), pour l'engagement dudit bouchon axial (15);
- une douille à alignement et centrage automatique (21), où un bout (16) dudit arbre (17) peut être couplé rotatif, ladite douille (21) étant agencée avec jeu et en accouplement empêchant la rotation dans une portion conique (18b) dudit logement (18) qui est fuselée à partir de la tête (14) envers le fond (11) dudit corps creux (12) ;
- un joint torique (23) qui est interposé de façon à interférer entre ladite douille (21) et ledit logement (18) ; et
- un élément (24) pour empêcher le glissement axial desdits élément fileté, douille et joint torique dudit support (10).

2. Support selon la revendication 1, **caractérisé en ce que** ledit logement (18) est équipé, dans une région inférieure, d'un épaulement annulaire (25) qui fournit ledit élément terminal de tenue sur lequel ledit élément fileté (19) est en appui.

3. Support selon une ou plusieurs revendications précédentes, **caractérisé en ce que** ledit élément fileté à l'intérieur (19) est composé d'un écrou hexagonal à agencer, en assemblage, de façon à s'appuyer sur ledit épaulement annulaire (25) dans une portion inférieure (18a) dudit logement (18).

4. Support selon une ou plusieurs revendications précédentes, **caractérisé en ce que** ladite portion inférieure (18a) dudit logement (18) est équipée d'une pluralité de dents orientés axialement (26) agencés sur sa surface cylindrique et adaptés pour fournir un arrêt de rotation pour ledit élément fileté à l'intérieur (19).

5. Support selon une ou plusieurs revendications précédentes, **caractérisé en ce que** ladite douille (21) a une portion supérieure (21 a) dont le diamètre extérieur est plus petit que le diamètre extérieur de sa portion inférieure (21b) de façon à former un épaulement annulaire (27) sur lequel ledit joint torique (23) est en appui en assemblage, ledit joint torique (23) étant adapté pour entourer ladite portion supérieure (21a) avec interférence.

6. Support selon une ou plusieurs revendications précédentes, **caractérisé en ce que** ladite portion inférieure (21b) de la douille (21) est équipée de deux portions plates réciproquement opposées (28) qui sont en face, en assemblage, de deux portions plates réciproquement opposées (29) dudit logement (18), de façon à fournir ledit accouplement empêchant la rotation.

7. Support selon une ou plusieurs revendications précédentes, **caractérisé en ce que** ledit élément de tenue (24) est sensiblement annulaire et formé de façon à être fixé sur ledit fond (11).

8. Support selon une ou plusieurs revendications précédentes, **caractérisé en ce que** ledit élément de tenue (24) est composé d'un bouchon, pour être fixé sur une bride (30) roulant dans ledit corps tubulaire (12) sur ledit fond (11) et comprenant une portion annulaire plate (24a) et une portion annulaire cylindrique (24b).

9. Support selon la revendication 8, **caractérisé en ce que** le diamètre intérieur de ladite bride (20) forme, avec lesdites portions plates réciproquement opposées (29) du logement (18) des épaulements (31) sur lesquels ledit joint torique (23) est en appui, en assemblage, de façon à se coupler avec interférence dans ladite bride (30).

10. Support selon une ou plusieurs revendications précédentes, **caractérisé en ce que** ladite portion annulaire plate (24a) du bouchon (24) a une dimension axiale qui est sensiblement incluse dans la dimension axiale de ladite portion supérieure (21a) de la douille (21) et un diamètre intérieur qui est plus grand que le diamètre extérieur de ladite portion supérieure (21a), formant un jeu annulaire.

11. Support selon une ou plusieurs revendications précédentes, **caractérisé en ce que** ladite portion annulaire plate (24a) du bouchon (24) est équipée de rainures radiales (32) s'étendant, en assemblage, sur ledit joint torique (23).

12. Support selon une ou plusieurs revendications précédentes, **caractérisé en ce que** ledit bouchon (24) est fixé sur ladite bride (30) par soudage ultrasonique.

13. Support selon une ou plusieurs des revendications 1 à 11, **caractérisé en ce que** ledit bouchon (24) est fixé sur ladite bride (30) par soudage par vibration.

14. Support selon une ou plusieurs des revendications 1 à 11, **caractérisé en ce que** ledit bouchon (24) est fixé sur ladite bride (30) par collage.

15. Support selon une ou plusieurs des revendications 1 à 11, **caractérisé en ce que** ledit bouchon (24) est fixé sur ladite bride (30) par déclenchement mécanique.
